# FASCICULE DE BREVET EUROPEEN

(11) **EP 2 393 739 B1**
(45) Date de publication et mention de la délivrance du brevet: **19.12.2012**
(21) Numéro de dépôt: 10702299.8
(22) Date de dépôt: 02.02.2010
(51) Int. Cl.: B65G 27/34

(54) **SYSTEME D'ALIMENTATION EN COMPOSANTS**
KOMPONENTENLIEFERUNGSSYSTEM
SYSTEM FOR SUPPLYING COMPONENTS

(30) Priorité: 05.02.2009 CH 1662009
(43) Date de publication de la demande: 14.12.2011
(73) Titulaire: Asyril SA, 1690 Villaz-Saint-Pierre (CH)
(72) Inventeur: PERROUD, Sébastien, CH-3172 Niederwangen (CH); HÄFNER, Tobias, CH-5630 Muri (CH); MUSSARD, Yves, CH-2034 Peseux (CH)
(74) Mandataire: Honoré, Anne-Claire
(86) Numéro de dépôt international: PCT/EP2010/051239
(87) Numéro de publication internationale: WO 2010/089290

(56) Documents cités:
- EP-A- 0 916 457
- WO-A-2007/109109
- FR-A- 2 604 376

## Description

### Domaine technique

La présente invention concerne un système d'alimentation en composants comprenant un dispositif vibrant équipé d'un plateau constituant une surface de préhension des composants par un robot et de moyens vibrants agencés pour faire vibrer ledit plateau.

### Etat de la technique

Un tel système peut être utilisé pour transporter des composants jusqu'à un robot comprenant un bras manipulateur, qui va venir saisir les composants sur le plateau. Dans de nombreux domaines, tels que l'électronique ou l'horlogerie, les composants sont amenés en vrac sur les chaines de montage. Afin de pouvoir les utiliser dans un processus automatisé, il est nécessaire de prévoir un système d'alimentation. Il existe déjà des systèmes d'alimentation pour des composants de taille moyenne à grande (> 3 mm²), tels que les bols vibrants ou les centrifugeuses. Par contre, l'alimentation en petits composants, présentant une taille inférieure à 3 mm², est un processus actuellement encore très mal maitrisé et relevant du hasard. Ceci vient du fait que les contraintes et les forces en présence pour les petits composants, telles que la capillarité et l'électrostatisme, entrent en compte et concurrencent la force de gravitation, utilisées dans les techniques classiques citées ci-dessus pour les composants de plus grande taille. Ces forces "parasites" entrainent un "collage" des composants les uns aux autres ou contre les surfaces alentours, de sorte que les systèmes d'alimentation classiquement utilisés pour les composants de taille moyenne à grande ne peuvent être utilisés dans le domaine des petits composants.

Des systèmes d'alimentation en petits composants ont été développés et comprennent pour la plupart un plateau vibrant constituant une surface de préhension, sur lequel les composants doivent être séparés le mieux possible les uns des autres, et présenter l'orientation la plus favorable pour pouvoir être saisis par le robot.

De tels systèmes sont par exemple décrits dans les brevets US 7,028,829 et US 6,598,730. Ces systèmes comprennent des plateaux agencés pour vibrer uniquement selon une direction verticale. Toutefois, ces systèmes manquent d'efficacité et ne permettent pas d'alimenter le robot de manière convenable lorsqu'il s'agit de transporter des petits composants.

Par ailleurs, les systèmes d'alimentation sont équipés généralement d'un élément pour récupérer les composants tombés du plateau vibrant et pour les remettre en circulation. Un tel élément est par exemple décrit dans le brevet US 6,598,730. Il consiste en un élément mobile verticalement qui vient s'intercaler entre le réservoir de stockage et le plateau vibrant, pour permettre aux composants de tomber par gravité du réservoir au plateau vibrant. Toutefois, le mouvement des composants entre le réservoir de stockage, l'élément de remise en circulation et le plateau vibrant est dû uniquement à la gravité, le réservoir de stockage et l'élément de remise en circulation présentant des parois inclinées vers le bas. Un tel dispositif nécessite donc un encombrement important du fait de la place prise par le réservoir de stockage incliné. De plus, il ne peut pas être utilisé lorsque le transport des composants s'effectue au moyen d'un convoyeur linéaire, les composants ne pouvant pas se déplacer par gravité entre le convoyeur et l'élément de remise en circulation.

La demande WO 2007/109109 , qui contient un système d'alimentation en composants selon le préambule de la revendication 1, décrit un appareil et un procédé pour appliquer un mouvement à un ou plusieurs articles, consistant notamment à placer ce ou ces articles sur une surface d'un organe de support et à appliquer un mouvement vibratoire à l'organe de support par vibrations d'actionneurs rattachés à celui-ci, le mouvement vibratoire comprenant au moins un composant vibratoire rotationnel autour d'un ou plusieurs axes hors alignement par rapport au vecteur de gravité afin de produire des champs de force efficaces sur la surface. Plus particulièrement, l'organe de support est un plateau qui vibre selon six degrés de liberté, sous l'action de huit actionneurs linéaires agencés de manière à exercer des forces et des couples sur le plateau dans des directions arbitraires à tout moment. Ce système présente les inconvénients d'être complexe et encombrant. De plus, il présente l'inconvénient de générer dans tous les cas au moins une rotation de la surface de l'organe de support. Cette rotation engendre des accélérations différentes sur les composants suivant leur position relative à l'axe de rotation. Si les composants sont sur l'axe de rotation, ils bougeront peu. Par contre, s'ils sont éloignés, ils subiront une grande accélération. Cet effet est néfaste dans le cadre d'une alimentation en composants pour laquelle on cherche à agir sur toute la surface avec les mêmes effets de vibration afin d'avoir une homogénéité de comportement des composants.

Un but de la présente invention est donc de pallier ces inconvénients, en proposant un système d'alimentation en composants permettant une séparation et une orientation efficace desdits composants.

Un autre but de la présente invention est de proposer un système d'alimentation en composants particulièrement approprié au transport de petits composants, tels que définis ci-dessus.

Un autre but de la présente invention est de proposer un système d'alimentation en composants permettant de remettre facilement en circulation les composants, en particulier lorsque le convoyeur utilisé pour le transport des composants est un convoyeur linéaire.

### Divulgation de l'invention

A cet effet, et conformément à la présente invention, il est proposé un système d'alimentation en composants selon la revendication 1.

Selon l'invention, lesdits moyens vibrants comprennent des actuateurs vibrants comprenant respectivement un élément vibrant agencé pour se déplacer selon au moins cinq degrés de liberté.

Les vibrations du plateau dans les trois directions permettent de mieux contrôler la répartition des composants sur sa surface et d'augmenter le pourcentage des composants correctement orientés.

Le dispositif vibrant comprend un bâti, un support vibrant portant le plateau, le support vibrant étant maintenu par les actuateurs reliés respectivement d'une part audit support vibrant et d'autre part au bâti.

De préférence, les moyens vibrants sont agencés pour faire vibrer ledit plateau à une fréquence comprise entre 5 Hz et 500 Hz, de préférence entre 50 Hz et 300 Hz.

Selon une variante de réalisation, le support vibrant peut être de forme parallélépipédique, et les moyens vibrants peuvent être constitués d'au moins trois actuateurs positionnés respectivement selon les directions x, y, et z, sur les faces dudit support vibrant, à l'exception de la face portant le plateau.

D'une manière particulièrement préférée, le guide de chacun des actuateurs vibrants est en forme de soufflet et agencé pour permettre à l'élément vibrant de se déplacer selon trois degrés de liberté en translation et au moins deux degrés de liberté en rotation. Un générateur de vibrations peut être agencé pour déplacer et faire vibrer l'élément vibrant par rapport à l'élément fixe selon un mouvement de translation, respectivement selon les directions x, y et z.

Le générateur de vibrations peut être du type piézoélectrique, électromagnétique, pneumatique, hydraulique.

Avantageusement, chaque actuateur vibrant peut être contrôlé de manière indépendante en fréquence, en amplitude et en phase, et est capable de produire des ondes arbitraires.

D'une manière avantageuse, le système d'alimentation peut comprendre en outre un convoyeur, agencé pour amener des composants sur le plateau du dispositif vibrant.

De préférence, le convoyeur peut être un convoyeur linéaire mis en mouvement par un vibrateur linéaire.

D'une manière avantageuse, le système d'alimentation comprend en outre des moyens d'entrainement du convoyeur agencés pour conférer audit convoyeur un mouvement de translation circulaire entre une position haute, selon laquelle ledit convoyeur est positionné au-dessus du dispositif vibrant, et une position basse, selon laquelle ledit convoyeur est positionné au-dessous du dispositif vibrant. Lesdits moyens d'entrainement du convoyeur peuvent comprendre un plateau support de convoyeur comprenant quatre pieds respectivement montés articulés à une extrémité de quatre pattes entrainées en rotation par leur autre extrémité, de manière à former deux parallélogrammes déformables, et un mécanisme d'entrainement en rotation desdites pattes.

Avantageusement, le convoyeur peut présenter à son extrémité, du côté du dispositif vibrant, un rebord transversal, le plateau du dispositif vibrant comprenant un épaulement agencé pour recevoir le rebord transversal du convoyeur lorsque ledit convoyeur est en position basse.

D'une manière avantageuse, le convoyeur peut être monté de manière amovible de manière à pouvoir être démonté et servir de réservoir de stockage.

En outre, le système d'alimentation peut comprendre un système de visualisation agencé pour repérer la position des composants sur le plateau du dispositif vibrant et pour actionner le dispositif vibrant et le robot en fonction de la répartition et de l'orientation des composants. Lorsque le système comprend de plus un convoyeur, le système de visualisation peut être agencé pour actionner également le convoyeur en fonction de la répartition et de l'orientation des composants.

### Brève description des dessins

D'autres caractéristiques de la présente invention apparaîtront plus clairement à la lecture de la description qui va suivre, faite en référence aux dessins annexés, dans lesquels:
- la figure 1 est une vue schématique d'un système d'alimentation selon l'invention,
- la figure 2 est une vue du dispositif vibrant,
- la figure 3 est une vue en coupe d'un actuateur vibrant,
- la figure 4 est une vue en perspective du dispositif vibrant et du convoyeur linéaire, le capot ayant été retiré,
- la figure 5a est une vue en coupe du dispositif vibrant et du convoyeur linéaire en position basse, et
- la figure 5b est une vue en coupe du dispositif vibrant et du convoyeur linéaire en position haute.

### Modes de réalisation de l'invention

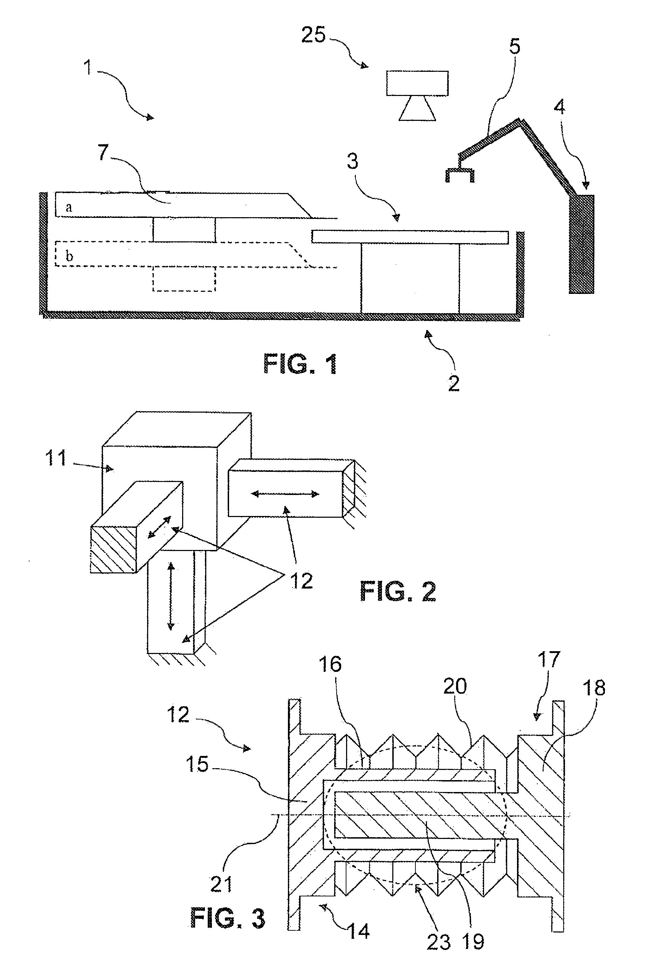

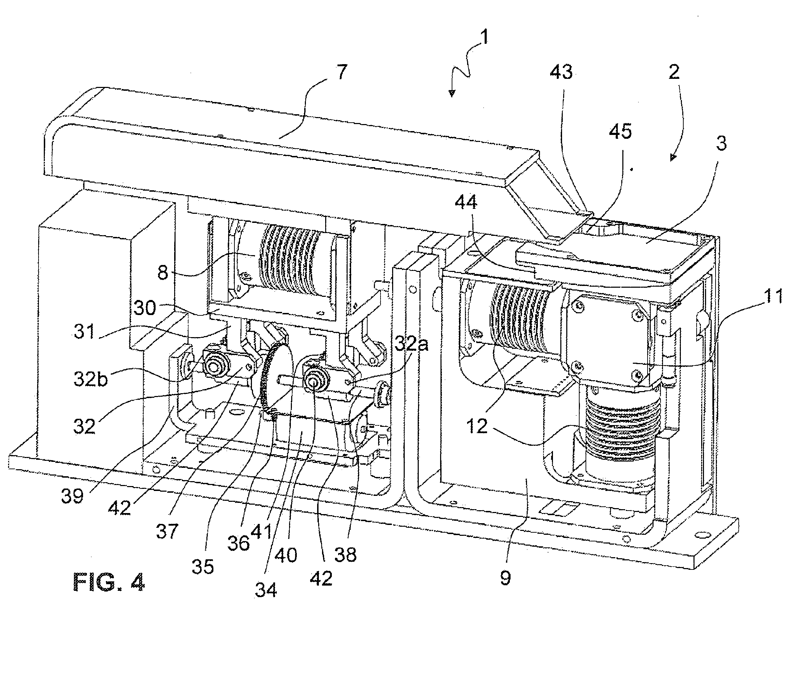

En référence aux figures 1 et 4, il est représenté un système d'alimentation 1 en composants stockés en vrac dans un silo non représenté. Ledit système d'alimentation 1 comprend un dispositif vibrant 2 équipé d'un plateau 3 constituant une surface de préhension des composants par un robot 4 équipé d'un bras manipulateur 5 articulé. Pour amener les composants stockés dans le silo sur le plateau 3, le système d'alimentation 1 comprend un convoyeur 7, indépendant du dispositif vibrant 2. Plus spécifiquement, le convoyeur 7 est séparé du plateau 3.

Dans la variante représentée, le convoyeur 7 est un convoyeur linéaire mis en mouvement par un vibrateur linéaire 8. Un tel vibrateur linéaire est connu en soi et ne nécessite pas de description complémentaire. Il est bien évident que tout autre type de convoyeur, indépendant du dispositif vibrant et séparé du plateau, peut être utilisé pour amener les composants sur le plateau 3. Le convoyeur 7 peut être monté de manière amovible de manière à pouvoir être démonté et servir de réservoir de stockage.

En référence plus particulièrement à la figure 4, le dispositif vibrant 2 comprend un bâti 9, un support vibrant 11 et des moyens vibrants agencés pour faire vibrer le plateau 3. Le support vibrant 11 est ici de forme cubique, sa face supérieure portant ledit plateau 3. Le plateau 3 peut être monté sur le support vibrant 11 de manière fixe ou amovible si l'on souhaite pouvoir changer facilement le plateau 3, pour pouvoir par exemple l'adapter aux composants transportés. Le plateau 3 peut être rétro-éclairé pour faciliter la visualisation des composants.

Selon l'invention, lesdits moyens vibrants sont agencés pour être capables de faire vibrer le plateau 3 dans l'une des trois directions x, y, z, et pour être capables de faire vibrer le plateau 3 dans des directions correspondant à n'importe quelle combinaison de ces trois directions x, y et z. Les moyens vibrants sont agencés pour faire vibrer le plateau à des fréquences comprises entre 5 Hz et 500 Hz, de préférence entre 50 Hz et 300 Hz.

A cet effet, les moyens vibrants sont constitués de trois actuateurs vibrants 12, agencés et orientés les uns par rapport aux autres de manière à obtenir des vibrations dans l'une des trois directions x, y, z, et leurs combinaisons. De préférence, les actuateurs vibrants 12 sont positionnés respectivement selon les directions x, y, et z, sur les faces du support vibrant 11, à l'exception de sa face supérieure portant le plateau 3, comme le montre la figure 3. Chaque actuateur vibrant 12 est relié d'une part à l'une des faces du support vibrant 11 et d'autre part à l'une des faces en regard du bâti 9, de sorte que le support vibrant 11 est uniquement maintenu par les actuateurs vibrants 12.

En référence à la figure 3, un actuateur vibrant 12 comprend un élément fixe 14 comprenant une base 15 montée sur le bâti 9 et un corps creux 16, et un élément vibrant 17 comprenant une base 18 montée sur la face correspondante du support vibrant 11 et un corps 19 monté mobile selon un mouvement de translation à l'intérieur du corps creux 16 de l'élément fixe 14. La base 18 de l'élément vibrant 17 est reliée à la base 15 de l'élément fixe 14 par un guide en forme de soufflet 20 agencé pour permettre à l'élément vibrant 17 de se déplacer selon trois degrés de liberté en translation et au moins deux degrés de liberté en rotation. Seule la rotation autour de l'axe de symétrie 21 peut éventuellement être empêchée en fonction de la rigidité du matériau dans lesquelles sont réalisées les extrémités du soufflet 20. Ainsi, chaque actuateur vibrant 12 comprend un élément vibrant 17 agencé pour se déplacer selon cinq ou six degrés de liberté. Le soufflet 20 peut être réalisé en matériau métallique.

Chacun des trois actuateurs vibrants 12 comprend également un générateur de vibrations 23 agencé pour déplacer et faire vibrer l'élément vibrant 17 par rapport à l'élément fixe 14 selon un mouvement de translation, respectivement selon les directions x, y et z.

Le générateur de vibrations 14 est du type piézoélectrique, électromagnétique, pneumatique, hydraulique.

Les trois actuateurs vibrants 12 sont agencés pour générer un mouvement de vibration en translation respectivement dans les directions x, y et z. Cependant, les cinq degrés de liberté (3 en translations et 2 en rotations) conférés à chaque élément vibrant 18 par les trois actionneurs 12 permettent d'obtenir des déplacements du support vibrant 11 dans les trois directions x, y, z et toutes leurs combinaisons.

Chaque actuateur vibrant 12 est contrôlé de manière indépendante en fréquence, en amplitude et en phase, et est capable de produire des ondes arbitraires, afin de contrôler, le mieux possible, le déplacement des composants.

Le système d'alimentation 1 comprend un système de visualisation 25 équipé d'une caméra et agencé pour repérer la position des composants sur le plateau 3 du dispositif vibrant 2 et pour actionner le convoyeur 7, le dispositif vibrant 2 et le robot 4 en fonction de la répartition et de l'orientation des composants. Le système de visualisation 25 est agencé notamment pour repérer les éventuels amas des composants et pour actionner les actuateurs vibrants 12 de manière à faire vibrer le plateau 3 pour détruire ces amas et pour répartir les composants de manière homogène.

Dans la variante représentée, le système d'alimentation 1 comprend en outre des moyens d'entrainement du convoyeur 7 agencés pour conférer audit convoyeur 7 un mouvement de translation circulaire entre une position haute (a sur la figure 1), selon laquelle ledit convoyeur 7 est positionné au-dessus du dispositif vibrant 2, et une position basse (b sur la figure 1), selon laquelle ledit convoyeur 7 est positionné au-dessous du dispositif vibrant 2.

En référence à la figure 4, lesdits moyens d'entrainement du convoyeur 7 comprennent un plateau-support 30, sur lequel sont montés fixes le convoyeur linéaire 7 et son vibrateur linéaire 8.

Le plateau-support 30 est de forme rectangulaire et comprend, répartis aux quatre coins, quatre pieds 31 respectivement montés libres en rotation à une extrémité 32a de quatre pattes 32. Par ailleurs, chacune desdites pattes 32 est entrainée en rotation par son autre extrémité 32b, de manière à former, avec les pieds 31 deux parallélogrammes déformables, afin de conférer au plateau-support 30, et donc au convoyeur 7 et à son vibrateur linéaire 8, un mouvement de translation circulaire entre les deux positions basse et haute.

De plus, les moyens d'entrainement du convoyeur 7 comprennent un mécanisme d'entrainement en rotation desdites pattes 32.

Dans la variante représentée, le mécanisme d'entraînement en rotation des pattes 32 comprend un moteur 34, entrainant en rotation un axe 35 sur lequel est montée une roue dentée 36. Ladite roue dentée 36 engrène avec une roue dentée 37 montée fixe sur un axe 38 monté libre en rotation sur un bâti 39 du système d'alimentation, longitudinalement entre deux paires de pattes 32, avant et arrière par rapport à la figure 4. Chaque paire de pattes 32 est reliée par un axe 40 qui comprend une roue dentée 41 coopérant avec une vis sans fin 42 prévue sur l'axe 38 en regard de la roue dentée 41 afin d'entrainer en rotation l'axe 40. A chaque extrémité de l'axe 40 sont montées les extrémités 32b des pattes 32.

Le convoyeur 7 présente à son extrémité, du côté du dispositif vibrant 2, un rebord transversal 43 plat. Le plateau 3 du dispositif vibrant 2 comprend un épaulement 44 agencé pour recevoir le rebord transversal 43 du convoyeur 7 lorsque ledit convoyeur 7 est en position basse.

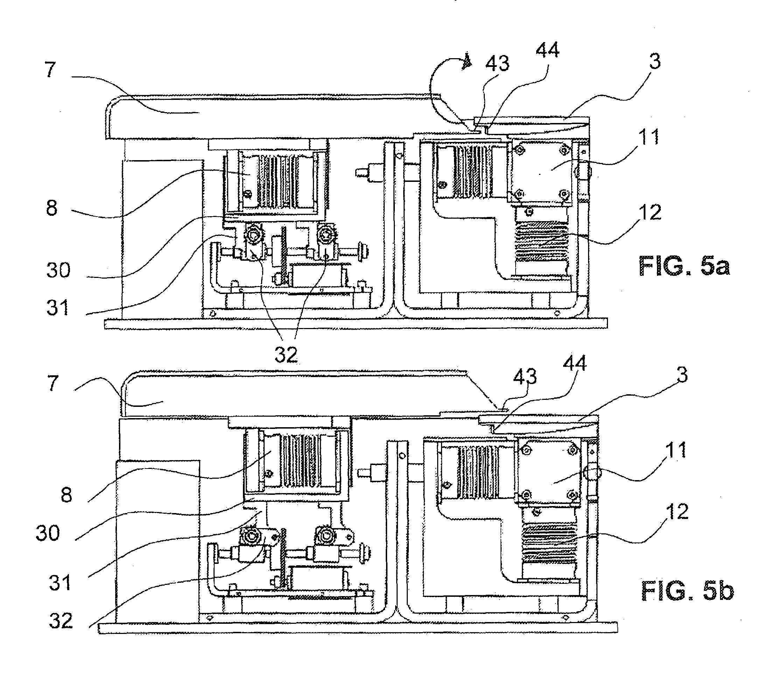

Lorsque les composants sont amenés du silo de stockage sur le convoyeur 7, celui-ci se trouve en position haute, représentée sur la figure 5b. Le convoyeur linéaire 7 amène les composants sur le dispositif vibrant 2. Les actuateurs vibrants 12 sont actionnés de manière à faire vibrer le plateau 3 de sorte que les composants se déplacent sur le plateau 3. La caméra du système de visualisation 25 observe les composants et le système de visualisation 25 commande les actuateurs vibrants 12 de manière faire vibrer le plateau 3 dans toutes les directions x, y, z et leurs combinaisons, afin d'orienter correctement les composants, qui sont alors pris par le bras manipulateur 5 du robot 4. Ainsi, les composants, même les plus petits, peuvent être orientés, dispersés et déplacés dans toutes les directions possibles, afin d'atteindre une position optimale pour pouvoir être pris par le robot. Le cycle vibration-observation-préhension est répété de manière continue.

Lorsque l'opération de transfert des composants est terminée, il peut rester sur le plateau 3 des composants non utilisés.

En actionnant le moteur 34 et les moyens d'entrainement du plateau-support 30, le convoyeur 7 est amené en position basse, représentée sur la figure 5a. Ainsi, le convoyeur 7 est placé sous le plateau 3 de sorte qu'en actionnant les actuateurs vibrants 12 de manière appropriée, les composants sur le plateau 3 peuvent être facilement déplacés vers la partie arrière du plateau 3, ramenés dans le convoyeur 7 et remis en circulation. La partie arrière du plateau 3 peut comporter des chicanes 45 facilitant le déplacement des composants du plateau 3 vers le convoyeur 7 en position basse.

Le système selon l'invention est particulièrement adapté au transport de composants de petites tailles, mais il est bien évident qu'il peut être utilisé pour des composants de plus grandes tailles.

## Revendications

1. Système d'alimentation (1) en composants comprenant un dispositif vibrant (2) équipé d'un bâti (9), d'un support vibrant (11), d'un plateau (3) constituant une surface de préhension des composants par un robot (4) et porté par ledit support vibrant (11), et de moyens vibrants agencés pour être capables de faire vibrer ledit plateau (3) dans l'une des trois directions x, y, z, et pour être capables de faire vibrer ledit plateau (3) dans des directions correspondant à n'importe quelle combinaison de ces trois directions x, y et z, **caractérisé en ce que** lesdits moyens vibrants comprennent des actuateurs vibrants (12) reliés respectivement d'une part audit support vibrant (11) et d'autre part au bâti (9) pour maintenir ledit support vibrant (11), lesdits actuateurs vibrants (12) comprenant respectivement un élément fixe (14) monté sur le bâti (9), un élément vibrant (17) monté mobile par rapport à l'élément fixe (14) et relié au support vibrant (11) et un guide (20) reliant les éléments fixe (14) et vibrant (17) agencé pour permettre à l'élément vibrant (17) de se déplacer selon au moins cinq degrés de liberté.

2. Système selon la revendication 1, **caractérisé en ce que** lesdits moyens vibrants (12) sont agencés pour faire vibrer ledit plateau (3) à une fréquence comprise entre 5 Hz et 500 Hz, de préférence entre 50 Hz et 300 Hz.

3. Système selon la revendication 1 ou 2, **caractérisé en ce que** le support vibrant (11) est de forme parallélépipédique et **en ce que** les moyens vibrants sont constitués d'au moins trois actuateurs vibrants (12) positionnés respectivement selon les directions x, y, et z, sur les faces dudit support vibrant (11), à l'exception de la face portant le plateau (3).

4. Système selon l'une quelconque des revendications 1 à 3, **caractérisé en ce que** le guide (20) est en forme de soufflet reliant les éléments fixe (14) et vibrant (17) et agencé pour permettre à l'élément vibrant (17) de se déplacer selon trois degrés de liberté en translation et au moins deux degrés de liberté en rotation.

5. Système selon l'une quelconque des revendications 1 à 4, **caractérisé en ce que** chaque actuateur vibrant comprend un générateur de vibrations (23) agencé pour déplacer et faire vibrer l'élément vibrant (17) par rapport à l'élément fixe (14) selon un mouvement de translation, respectivement selon les directions x, y et z.

6. Système selon la revendication 5, **caractérisé en ce que** le générateur de vibrations (23) est du type piézoélectrique, électromagnétique, pneumatique, hydraulique.

7. Système selon l'une quelconque des revendications 1 à 6, **caractérisé en ce que** chaque actuateur vibrant (12) est contrôlé de manière indépendante en fréquence, en amplitude, et en phase, et est capable de produire des ondes arbitraires.

8. Système selon l'une quelconque des revendications précédentes, **caractérisé en ce qu'**il comprend en outre un convoyeur (7), agencé pour amener des composants sur le plateau (3) du dispositif vibrant (2).

9. Système selon la revendication 8, **caractérisé en ce que** le convoyeur (7) est un convoyeur linéaire mis en mouvement par un vibrateur linéaire (8).

10. Système selon l'une quelconque des revendications 8 et 9, **caractérisé en ce qu'**il comprend en outre des moyens d'entrainement (30, 31, 32) du convoyeur (7) agencés pour conférer audit convoyeur (7) un mouvement de translation circulaire entre une position haute, selon laquelle ledit convoyeur (7) est positionné au-dessus du dispositif vibrant (2), et une position basse, selon laquelle ledit convoyeur (7) est positionné au-dessous du dispositif vibrant (2).

11. Système selon la revendication 10, **caractérisé en ce que** lesdits moyens d'entrainement du convoyeur (7) comprennent un plateau support (30) du convoyeur (7) comprenant quatre pieds (31) respectivement montés articulés à une extrémité (32a) de quatre pattes (32) entrainées en rotation par leur autre extrémité (32b), de manière à former deux parallélogrammes déformables, et un mécanisme (34, 35, 36, 37, 38, 40, 41) d'entrainement en rotation desdites pattes (32).

12. Système selon l'une quelconque des revendications 10 et 11, **caractérisé en ce que** le convoyeur (7) présente à son extrémité, du côté du dispositif vibrant (2), un rebord transversal (43), et **en ce que** le plateau (3) du dispositif vibrant (2) comprend un épaulement (44) agencé pour recevoir le rebord transversal (43) du convoyeur (7) lorsque ledit convoyeur (7) est en position basse.

13. Système selon l'une quelconque des revendications 8 à 12, **caractérisé en ce que** le convoyeur (7) est monté de manière amovible de manière à pouvoir être démonté et servir de réservoir de stockage.

14. Système selon l'une quelconque des revendications précédentes, **caractérisé en ce qu'**il comprend en outre un système de visualisation (25) agencé pour repérer la position des composants sur le plateau (3) du dispositif vibrant (2) et pour actionner le dispositif vibrant (2) et le robot (4) en fonction de la répartition et de l'orientation des composants.

## Claims

1. A system (1) for supplying components comprising a vibrating device (2) provided with a frame (9), a vibrating support (11), a plate (3) forming a surface for enabling the components to be grasped by a robot (4) and supported by said vibrating support (11), and vibrating means arranged to be capable of vibrating said plate (3) in one of the three directions x, y, z, and to be capable of vibrating said plate (3) in directions corresponding to any combination of these three directions x, y and z, **characterized in that** said vibrating means comprise vibrating actuators (12) being respectively connected on the one hand to said vibrating support (11) and on the other hand to said frame (9) for maintaining said vibrating support (11), said vibrating actuators (12) respectively comprising a stationary element (14) mounted on the frame (9), a vibrating element (17) being movably mounted relative to the stationary element (14) and connected to the vibrating support (11) and a guide (20) connecting the stationary element (14) and the vibrating element (17) arranged to allow the vibrating element (17) to move with at least five degrees of freedom.

2. The system according to claim 1, **characterized in that** said vibrating means (12) are arranged to make said plate (3) vibrate at a frequency between 5 Hz and 500 Hz, preferably between 50 Hz and 300 Hz.

3. The system according to claim 1 or 2, **characterized in that** the vibrating support (11) is parallelepiped, and **in that** the vibrating means is made up of at least three vibrators actuators (12) respectively positioned in the directions x, y, and z, on the faces of said vibrating support (11), with the exception of the face supporting the plate (3).

4. The system according to any one of claims 1 to 3, **characterized in that** the guide (20) is in the form of a bellows connecting the stationary (14) and vibrating (17) elements and arranged to allow the vibrating element (17) to move with three degrees of freedom in translation and at least two degrees of freedom in rotation.

5. The system according to any one of claims 1 to 4, **characterized in that** each vibrating actuator comprises a vibration generator (23) arranged to move the vibrating element (17) and make it vibrate relative to the stationary element (14) following a translational movement, in directions x, y and z, respectively.

6. The system according to claim 5, **characterized in that** the vibration generator (23) is of the piezoelectric, electromagnetic, pneumatic or hydraulic type.

7. The system according to any one of claims 1 to 6, **characterized in that** each vibrating actuator (12) is controlled independently in terms of frequency, amplitude and phase, and is able to produce arbitrary waves.

8. The system according to any one of the preceding claims, **characterized in that** it also comprises a conveyor (7), arranged to convey components on the plate (3) of the vibrating device (2).

9. The system according to claim 8, **characterized in that** the conveyor (7) is a linear conveyor set in motion by a linear vibrator (8).

10. The system according to any one of claims 8 and 9, **characterized in that** it also comprises means (30, 31, 32) for driving the conveyor (7) arranged to impart a circular translational movement to said conveyor (7) between an upper position, in which said conveyor (7) is positioned above the vibrating device (2), and a lower position, in which said conveyor (7) is positioned below the vibrating device (2).

11. The system according to claim 10, **characterized in that** said driving means of the conveyor (7) comprises a conveyor (7) support plate (30) comprising four feet (31) respectively mounted articulated at one end (32a) of four legs (32) driven in rotation by their other end (32b), so as to form two deformable parallelograms, and a mechanism (34, 35, 36, 37, 38, 40, 41) for driving said legs (32) in rotation.

12. The system according to any one of claims 10 and 11, **characterized in that** said conveyor (7) has, at the end thereof, on the side of the vibrating device (2), a transverse rim (43), and **in that** the plate (3) of the vibrating device (2) comprising a shoulder (44) arranged to receive the transverse rim (43) of the conveyor (7) when said conveyor (7) is in the lower position.

13. The system according to any one of claims 8 to 12, **characterized in that** the conveyor (7) is mounted removably so that it can be disassembled and serve as a storage reservoir.

14. The system according to any one of the preceding claims, **characterized in that** it also comprises a viewing system (25) arranged to identify the position of the components on the plate (3) of the vibrating device (2) and actuate the vibrating device (2) and the robot (4) as a function of the distribution and orientation of the components.

## Patentansprüche

1. System zur Versorgung (1) mit Bauelementen, das eine Vibrationsvorrichtung (2) umfasst, die mit einem Gestell (9), einem vibrierenden Träger (11), einer Platte (3), die eine Aufnahmefläche der Bauelemente durch einen Roboter (4) bildet und von dem vibrierenden Träger (11) getragen wird, und mit Vibrationsmitteln, die ausgebildet sind, um in der Lage zu sein, die Platte (3) in eine der drei Richtungen x, y, z vibrieren zu lassen und um in der Lage zu sein, die Platte (3) in Richtungen vibrieren zu lassen, die jeder beliebigen Kombination dieser drei Richtungen x, y und z entsprechen, ausgestattet ist, **dadurch gekennzeichnet, dass** die Vibrationsmittel Vibrationsaktuatoren (12) umfassen, die jeweils auf der einen Seite mit dem vibrierenden Träger (11) und auf der anderen Seite mit dem Gestell (9) verbunden sind, um den vibrierenden Träger (11) zu halten, wobei die Vibrationsaktuatoren (12) jeweils ein starres Element (14), das auf dem Gestell (9) montiert ist, ein Vibrationselement (17), das im Verhältnis zum starren Element (14) bewegbar montiert ist und mit dem vibrierenden Träger (11) verbunden ist und eine Führung (20) umfassen, die das starre (14) und das Vibrationselement (17) verbindet, die ausgebildet ist, um dem Vibrationselement (17) zu erlauben, sich gemäß mindestens fünf Freiheitsgraden zu verlagern.

2. System nach Anspruch 1, **dadurch gekennzeichnet, dass** die Vibrationsmittel (12) ausgebildet sind, um die Platte (3) in einer Frequenz zwischen 5 Hz und 500 Hz inklusive, vorzugsweise zwischen 50 Hz und 300 Hz, in Vibration zu versetzen.

3. System nach Anspruch 1 oder 2, **dadurch gekennzeichnet, dass** der vibrierende Träger (11) eine parallelepipedische Form hat und dass die Vibrationsmittel aus mindestens drei Vibrationsaktuatoren (12) bestehen, die jeweils gemäß den Richtungen x, y und z auf den Seiten des vibrierenden Trägers (11) positioniert sind, mit Ausnahme der Seite, die die Platte (3) trägt.

4. System nach einem der Ansprüche 1 bis 3, **dadurch gekennzeichnet, dass** die Führung (20) wie ein Blasebalg geformt ist, der das starre (14) und Vibrationselement (17) verbindet und ausgebildet ist, um dem Vibrationselement (17) zu erlauben, sich gemäß drei Freiheitsgraden verschiebend und mindestens zwei Freiheitsgraden rotierend zu verlagern.

5. System nach einem der Ansprüche 1 bis 4, **dadurch gekennzeichnet, dass** jeder Vibrationsaktuator einen Vibrationserzeuger (23) umfasst, der ausgebildet ist, um das Vibrationselement (17) im Verhältnis zum starren Element (14) gemäß einer verschiebenden Bewegung jeweils gemäß den Richtungen x, y und z zu verlagern und in Vibration zu versetzen.

6. System nach Anspruch 5, **dadurch gekennzeichnet, dass** der Vibrationserzeuger (23) piezoelektrischer, elektromagnetischer, pneumatischer, hydraulischer Bauart ist.

7. System nach einem der Ansprüche 1 bis 6, **dadurch gekennzeichnet, dass** jeder Vibrationsaktuator (12) unabhängig im Hinblick auf Frequenz, Amplitude und Phase gesteuert wird und imstande ist, willkürliche Wellen zu produzieren.

8. System nach einem der vorangehenden Ansprüche, **dadurch gekennzeichnet, dass** es ferner eine Fördereinrichtung (7) umfasst, die ausgebildet ist, um Bauelemente auf die Platte (3) der Vibrationsvorrichtung (2) zu bringen.

9. System nach Anspruch 8, **dadurch gekennzeichnet, dass** die Fördereinrichtung (7) eine lineare Fördereinrichtung ist, die von einem linearen Vibrator (8) in Bewegung versetzt wird.

10. System nach einem der Ansprüche 8 und 9, **dadurch gekennzeichnet, dass** es ferner Antriebsmittel (30, 31, 32) der Fördereinrichtung (7) umfasst, die ausgebildet sind, um der Fördereinrichtung (7) eine kreisförmige verschiebende Bewegung zwischen einer hohen Position, in der die Fördereinrichtung (7) über der Vibrationsvorrichtung (2) positioniert ist, und einer niedrigen Position, in der die Fördereinrichtung (7) unter der Vibrationsvorrichtung (2) positioniert ist, zu verleihen.

11. System nach Anspruch 10, **dadurch gekennzeichnet, dass** die Antriebsmittel der Fördereinrichtung (7) eine Stützplatte (30) der Fördereinrichtung (7) umfassen, die vier Beine (31) umfasst, die jeweils angelenkt an einem Ende (32a) von vier Füßen (32) montiert sind, die durch ihr anderes Ende (32b) rotierend angetrieben werden, so dass sie zwei verformbare Parallelogramme bilden, und einen Mechanismus (34, 35, 36, 37, 38, 40, 41), der die Füße (32) rotierend antreibt.

12. System nach einem der Ansprüche 10 und 11, **dadurch gekennzeichnet, dass** die Fördereinrichtung (7) an ihrem Ende auf der Seite der Vibrationsvorrichtung (2) einen transversalen Rand (43) aufweist und dass die Platte (3) der Vibrationsvorrichtung (2) einen Absatz (44) umfasst, der ausgebildet ist, um den transversalen Rand (43) der Fördereinrichtung (7) aufzunehmen, wenn die Fördereinrichtung (7) in niedriger Position ist.

13. System nach einem der Ansprüche 8 bis 12, **dadurch gekennzeichnet, dass** die Fördereinrichtung (7) derart entfernbar montiert ist, dass sie demontierbar und als Lagerbehältnis nutzbar ist.

14. System nach einem der vorangehenden Ansprüche, **dadurch gekennzeichnet, dass** es ferner ein Visualisierungssystem (25) umfasst, das ausgebildet ist, um die Position der Bauelemente auf der Platte (3) der Vibrationsvorrichtung (2) zu erfassen und um die Vibrationsvorrichtung (2) und den Roboter (4) in Abhängigkeit von der Verteilung und von der Ausrichtung der Bauelemente zu betätigen.
